# FASCICULE DE BREVET EUROPEEN

(11) **EP 1 122 132 B1**
(45) Date de publication et mention de la délivrance du brevet: **31.03.2004**
(21) Numéro de dépôt: 01400262.0
(22) Date de dépôt: 02.02.2001
(51) Int. Cl.: B60R 16/04, B60R 21/00

(54) **Montage auto-perforant d'une batterie de véhicule**
Selbstbrechende Montage einer Fahrzeugbatterie
Self puncturing assembly for a vehicle battery

(30) Priorité: 07.02.2000 FR 0001493
(43) Date de publication de la demande: 08.08.2001
(73) Titulaire: Renault s.a.s., 92100 Boulogne Billancourt (FR)
(72) Inventeur: Suss Marc, 92170 Vanves (FR); Renollet, Fabienne, 78966 Voisins le Bretonneux (FR)

(56) Documents cités:
- DE-A- 4 414 661
- GB-A- 2 230 493
- US-A- 4 174 014
- US-A- 5 476 151

## Description

L'invention concerne un agencement pour le montage d'une batterie d'accumulateurs dans un véhicule automobile.

L'invention concerne plus particulièrement un agencement pour le montage d'une batterie d'accumulateurs dans un véhicule automobile comportant une partie de structure de caisse formant compartiment moteur qui est agencée en avant d'une cellule formant habitacle du véhicule et qui est séparée de celle-ci par une cloison sensiblement transversale porteuse d'un organe mécanique du véhicule, en avant et en regard duquel est agencée la batterie.

On connaît de nombreux exemples de montages de batterie de ce type. GB-A-2 230 493 décrit un agencement pour le moteur d'un véhicule qui est déplacé latéralement par le maître cylindre de commande de freinage en cas d'un accident.

Dans la plupart des cas, ceux-ci sont destinés à prendre place dans un compartiment moteur qui comporte déjà bon nombre d'éléments mécaniques, et, de ce fait, l'espace dévolu à un tel montage de batterie est souvent restreint.

Dans cette configuration, lorsque le véhicule est soumis, lors d'un accident, à un choc de direction sensiblement longitudinale et d'intensité élevée provoquant un écrasement de la partie de structure de caisse et entraînant la batterie, celle-ci, qui forme un ensemble compact du fait de l'agencement serré des éléments internes d'accumulateur qu'elle contient, risque de venir en appui sur l'organe mécanique et de transmettre une partie de l'effort résultant du choc à celui-ci.

Cette situation est particulièrement dangereuse lorsque l'organe mécanique est, par exemple, un maître cylindre de commande d'un circuit de freinage dont un corps de piston métallique est orienté sensiblement longitudinalement. Sous l'effet du choc, le maître cylindre risque de pénétrer dans l'habitacle et de repousser un ensemble de pédalier du véhicule, occasionnant ainsi de graves lésions au conducteur du véhicule.

Pour remédier à cet inconvénient, l'invention propose un agencement du type décrit précédemment qui permet d'éviter que la batterie ne repousse l'organe mécanique.

Dans ce but, l'invention propose un agencement du type décrit précédemment, caractérisé en ce que l'organe mécanique comporte au moins une partie saillante conformée en pointe qui est tournée longitudinalement vers la batterie et qui est destinée, dans le cas d'un choc longitudinal poussant la batterie vers la cloison, à pénétrer la batterie et éviter ainsi qu'elle ne pousse l'organe mécanique à l'intérieur de l'habitacle.

Selon d'autres caractéristiques de l'invention :
- la batterie comporte des éléments internes conformés en forme de plaques parallèles, et elle est orientée de façon que ces éléments soient parallèles à la direction longitudinale de la partie saillante conformée en pointe ;
- l'organe mécanique comporte une partie saillante unique qui est sensiblement alignée avec un centre d'une face arrière transversale de la batterie ;
- l'organe mécanique comporte une pluralité de parties saillantes qui sont agencées en regard de la batterie, qui sont alignées dans un même plan, et qui sont espacées les unes des autres ;
- les parties saillantes sont alignées verticalement dans un plan passant entre deux éléments internes de la batterie ;
- les parties saillantes sont alignées transversalement et elles sont espacées d'une distance déterminée qui facilite leur pénétration dans la batterie ;
- les parois de la batterie comportent au moins une zone d'amorce de rupture, notamment sur la face transversale arrière de la batterie qui est agencée en regard d'une partie saillante de l'organe mécanique ;
- l'organe mécanique est un maître cylindre hydraulique qui comporte un corps de piston à l'extrémité duquel est agencée au moins une partie saillante.

D'autres caractéristiques et avantages de l'invention apparaîtront à la lecture de la description détaillée qui suit pour la compréhension de laquelle on se reportera aux dessins annexés dans lesquels :
- la figure 1 est une vue de côté avec arrachement d'un véhicule comportant un agencement selon l'invention ;
- la figure 2 est une vue schématique de dessus montrant le détail d'un premier mode de réalisation d'un agencement selon la figure 1 représenté avant le choc ;
- la figure 3 est une vue de l'agencement de la figure 2 représenté pendant le choc ;
- la figure 4 est une vue de dessus d'un deuxième mode de réalisation en variante de l'agencement selon l'invention ;
- la figure 5 est une vue de côté d'un troisième mode de réalisation en variante de l'agencement selon l'invention.

Dans la description qui va suivre, des chiffres de référence identiques désignent des pièces identiques ou ayant des fonctions similaires.

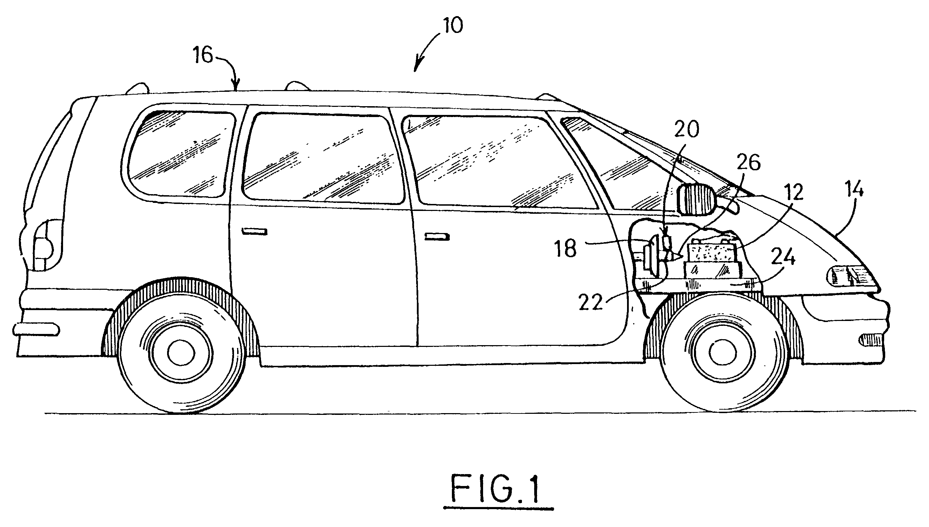

On a représenté à la figure 1 l'ensemble d'un véhicule 10 comportant un agencement réalisé conformément à l'invention pour le montage d'une batterie d'accumulateurs 12.

De manière connue, un tel agencement comporte une partie 14 de structure de caisse, formant notamment un compartiment moteur du véhicule, qui est agencée en avant d'une cellule 16 formant habitacle du véhicule. La partie 14 de structure de caisse est séparée de la cellule 16 par une cloison 18 sensiblement transversale qui porte un organe mécanique 20 du véhicule, notamment un maître cylindre hydraulique qui comporte un corps de piston 22 sensiblement longitudinal. La batterie 12 est par exemple fixée sur un longeron 24 longitudinal du véhicule, en avant et en regard du maître cylindre 20.

Il sera compris que cette disposition n'est pas limitative de l'invention, et que la batterie 12 peut être agencée en avant et en regard d'un organe mécanique 20 autre qu'un maître cylindre 20, par exemple un boîtier (non représenté) d'une crémaillère de direction sensiblement transversale du véhicule.

Conformément à l'invention, l'organe mécanique 20 comporte au moins une partie saillante 26, qui est conformée en pointe, qui est tournée longitudinalement vers la batterie 12, et qui est destinée, dans le cas d'un choc longitudinal poussant la batterie 12 vers la cloison 18, à pénétrer la batterie 12 et éviter ainsi qu'elle ne pousse l'organe mécanique 20 à l'intérieur de l'habitacle.

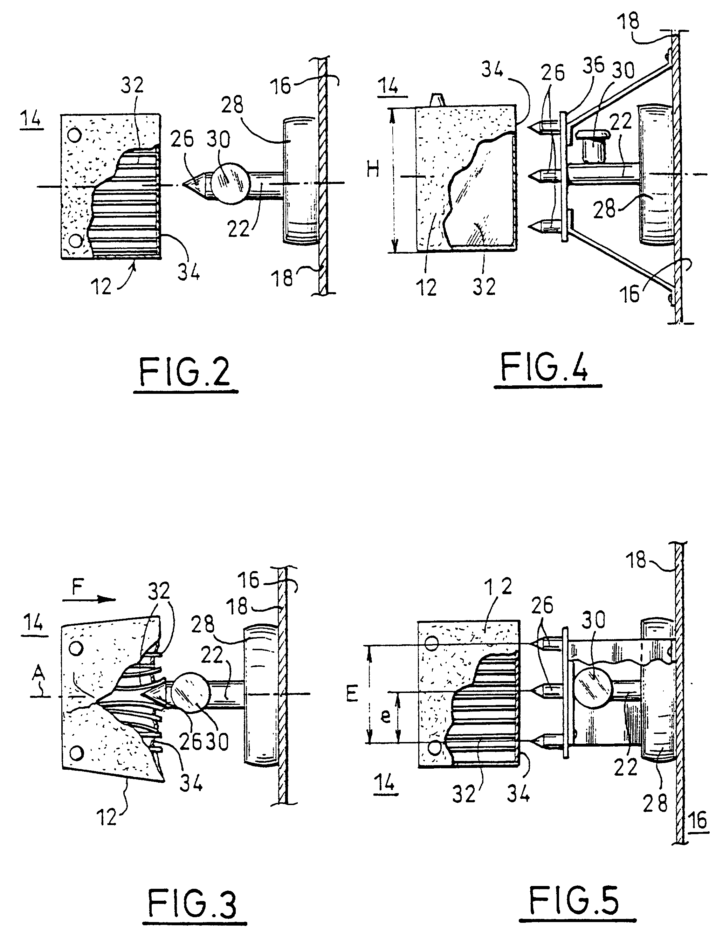

Les figures 2 et 3 illustrent plus précisément un premier mode de réalisation de l'invention appliqué à un organe mécanique 20 qui est constitué d'un maître cylindre.

De manière connue, le maître cylindre 20 est formé d'un servo-frein 28 qui est fixé sur la cloison transversale 18 et qui porte le corps 22 de piston, d'axe sensiblement longitudinal A.

Le corps de piston 22 porte par exemple un bocal 30 de liquide de frein et il est agencé en arrière et en regard de la batterie 12. Cette disposition n'est pas limitative de l'invention, et le bocal de liquide de frein peut ne pas être porté par le corps de piston 22. Ainsi, en variante (non représentée), le bocal peut être fixé au compartiment moteur du véhicule, et être relié au maître cylindre 20 par des canalisations.

Le corps de piston 22 porte à son extrémité avant libre la partie saillante 26 conformée en pointe. La partie saillante 26 peut être réalisée de diverses façons, notamment sous la forme d'une pointe qui est prévue pour être vissée, par l'intermédiaire d'un jeu de filetages et de taraudages conformes (non représentés) sur l'extrémité libre du corps 22 du piston.

En variante, la partie saillante 26 peut être moulée avec le corps de piston 22 du maître cylindre 20.

La batterie 12 est fixée de façon déterminée par rapport au compartiment moteur. En effet, la batterie 12 comporte des éléments 32 qui sont parallèles les uns aux autres. La batterie 12 est fixée par rapport au compartiment moteur de façon que d'une part tous ses éléments 32 soient parallèles à l'axe A longitudinal du corps 22 de piston, et que d'autre part l'axe A passe entre deux éléments 32. Par ailleurs, la batterie 12 est fixée dans le compartiment moteur de façon que sa face arrière transversale 34 soit à proximité immédiate de la partie saillante 26 de la batterie, la pointe de la partie saillante étant par ailleurs sensiblement alignée en regard du centre de la face arrière transversale 34 de la batterie.

De la sorte, comme l'illustre la figure 3, lorsque la batterie 12 est soumise à un effort "F" de direction longitudinale qui la pousse vers le tablier 18, la partie saillante 26 défonce la face arrière 34 de la batterie 12 et s'introduit entre deux éléments internes 32 en les forçant à s'écarter.

De la sorte, sous l'influence de l'effort F, tous les éléments 32 qui sont agencés de part et d'autre de l'extrémité saillante 26 s'écartent les uns des autres en glissant de côté de la partie saillante 26, ce qui permet avantageusement d'éviter que celle-ci ne pousse la maître cylindre 20 à l'intérieur de l'habitacle 16 du véhicule. La pénétration de la batterie 12 par la partie saillante 26 permet par ailleurs d'éviter quelle ne rigidifie l'espace qu'elle occupe sur le longeron 24 précédemment décrit en référence à la figure 1, ce qui permet par conséquent de favoriser l'écrasement de celui-ci.

Il sera compris que pour faciliter la pénétration de la batterie 12 par la partie saillante 26, les parois de la batterie 12 peuvent comporter au moins une zone d'amorce de rupture (non représentée) qui peut par exemple être agencée sur la face transversale arrière 34 de la batterie en regard de la partie saillante 26 de l'organe mécanique. Cette disposition permet à la fois de favoriser l'explosion de la face arrière 34 de la batterie 12 pour que la partie saillante 26 pénètre la batterie 12.

Les figures 4 et 5 illustrent des deuxième et troisième modes de réalisation en variante dans lesquels l'organe mécanique comporte une pluralité de parties saillantes 26 qui sont agencées en regard de la batterie 12, qui sont alignées dans un même plan, et qui sont espacées les unes des autres.

La figure 4 illustre la deuxième variante de l'invention dans laquelle les parties saillantes 26 sont alignées verticalement dans un plan passant entre deux éléments internes de la batterie. Par exemple, les parties saillantes 26 sont portées par une platine 36 de direction générale verticale qui s'appuie sur la cloison transversale 18 par l'intermédiaire de deux pattes de fixation 38. Les parties saillantes 26 sont réparties sur une hauteur H sensiblement égale à celle des éléments internes 32 de façon à prendre appui entre deux de ces éléments sur toute leur hauteur H. Cette configuration permet de faciliter l'éclatement de la batterie 12.

La figure 5 illustre la troisième variante de l'invention dans laquelle les parties saillantes 26 sont alignées transversalement. Par exemple, les parties saillantes 26 sont portées par une platine 36 de direction générale horizontale qui s'appuie sur la cloison transversale 18 par l'intermédiaire de deux pattes de fixation 38. Les parties saillantes 26 sont réparties sur une largeur "l" proche de la largeur de la batterie 12 de façon à pénétrer la batterie 12 sensiblement sur toute sa largeur. Cette configuration permet de répartir l'effort de pénétration des parties 26 sur toute la largeur "l" de la batterie 12.

Il sera compris que, dans cette configuration, les parties saillantes 26 sont préférablement espacées d'une distance minimale "e" qui permet à chaque partie saillante 26 de provoquer localement l'éclatement d'une zone déterminée de la face arrière 34 de la batterie 12 sans perturber l'éclatement de la zone de la face arrière 34 associée à la partie saillante 26 voisine.

L'invention permet avantageusement d'améliorer la sécurité passive d'un véhicule équipé d'un tel agencement.

## Revendications

1. Agencement pour le montage d'une batterie (12) d'accumulateurs dans un véhicule automobile (10) comportant une partie (14) de structure de caisse formant compartiment moteur qui est agencée en avant d'une cellule (16) formant habitacle du véhicule et qui est séparée de celle-ci par une cloison (18) sensiblement transversale porteuse d'un organe mécanique (20) du véhicule, en avant et en regard duquel est agencée la batterie (12),
**caractérisé en ce que** l'organe mécanique comporte au moins une partie saillante (26) conformée en pointe qui est tournée longitudinalement vers la batterie (12) et qui est destinée, dans le cas d'un choc longitudinal (F) poussant la batterie (12) vers la cloison (18), à pénétrer la batterie (12) et éviter ainsi qu'elle ne pousse l'organe mécanique (20) à l'intérieur de l'habitacle (16).

2. Agencement selon la revendication précédente, **caractérisé en ce que** la batterie (12) comporte des éléments internes (32) conformés en forme de plaques parallèles, et **en ce qu'**elle est orientée de façon que ces éléments (32) soient parallèles à la direction longitudinale (A) de la partie saillante (26) conformée en pointe.

3. Agencement selon l'une des revendications précédentes, **caractérisé en ce que** l'organe mécanique (20) comporte une partie saillante (26) unique qui est sensiblement alignée avec un centre d'une face arrière (34) transversale de la batterie (12).

4. Agencement selon les revendications 1 ou 2, **caractérisé en ce que** l'organe mécanique (20) comporte une pluralité de parties saillantes (26) qui sont agencées en regard de la batterie (12), qui sont alignées dans un même plan, et qui sont espacées les unes des autres.

5. Agencement selon la revendication précédente, **caractérisé en ce que** les parties saillantes (26) sont alignées verticalement dans un plan passant entre deux éléments (32) internes de la batterie.

6. Agencement selon la revendication 4, **caractérisé en ce que** les parties saillantes (26) sont alignées transversalement et **en ce qu'**elles sont espacées d'une distance déterminée (e) qui facilite leur pénétration dans la batterie (12).

7. Agencement selon l'une quelconque des revendications précédentes, **caractérisé en ce que** les parois de la batterie (12) comportent au moins une zone d'amorce de rupture, notamment sur la face transversale arrière (34) de la batterie (12) qui est agencée en regard d'une partie saillante (26) de l'organe mécanique (20).

8. Agencement selon l'une quelconque des revendications précédentes, **caractérisé en ce que** l'organe mécanique (20) est un maître cylindre hydraulique qui comporte un corps de piston (22) à l'extrémité duquel est agencée au moins une partie saillante (26).

## Patentansprüche

1. Anordnung für die Montage einer Akkumulatorenbatterie (12) in einem automobilen Fahrzeug (10), aufweisend einen Teil (14) der Gehäusestruktur, welche einen Motorraum formt, welche vor einer Zelle (16) angeordnet ist, die die Fahrgastzelle des Fahrzeugs formt und welche von dieser getrennt ist durch eine im Wesentlichen transversale Trennwand (18), welche ein mechanisches Element des Fahrzeugs trägt, wobei davor und im Vergleich zu diesem die Batterie (12) angeordnet ist,
**dadurch gekennzeichnet, dass**
das mechanische Element wenigstens einen vorstehenden Teil (26) aufweist, welcher einem Spitz entspricht, der longitudinal gegen die Batterie (12) gewendet ist, und welcher dazu bestimmt ist, im Falle eines longitudinalen Schocks (F) die Batterie (12) gegen die Trennwand (18) zu drücken, um die Batterie (12) zu penetrieren und somit zu vermeiden, dass sie das mechanische Teil (20) in den Innenraum der Fahrgastzelle (16) drückt.

2. Anordnung gemäß dem vorangegangenen Anspruch, **dadurch gekennzeichnet, dass** die Batterie (12) interne Elemente (32) aufweist, welche der Form paralleler Platten entsprechen, und dadurch, dass sie nach der Art ausgerichtet ist, dass diese Elemente (32) parallel sind zu der longitudinalen Richtung (A) des vorstehenden Teils (26), der einem Spitz entspricht.

3. Anordnung gemäß einem der vorangegangenen Ansprüche, **dadurch gekennzeichnet, dass** das mechanische Element (20) ein einziges vorstehendes Teil (26) aufweist, welches im Wesentlichen ausgerichtet ist mit einer Mitte einer transversalen hinteren Seite (34) der Batterie (12).

4. Anordnung gemäß den Ansprüchen 1 oder 2, **dadurch gekennzeichnet, dass** das mechanische Element (20) eine Vielzahl von vorstehenden Teilen (26) aufweist, welche im Vergleich zu der Batterie (12) angeordnet sind, die in einer gleichen Ebene ausgerichtet sind und die voneinander im Abstand sind.

5. Anordnung gemäß dem vorangegangenen Anspruch, **dadurch gekennzeichnet, dass** die vorstehenden Teile (26) vertikal ausgerichtet sind in einer Ebene, welche zwischen zwei internen Elementen (32) der Batterie hindurchgeht.

6. Anordnung gemäß Anspruch 4, **dadurch gekennzeichnet, dass** die vorstehenden Teile (26) transversal ausgerichtet sind und dadurch, dass sie in einem Abstand einer bestimmten Distanz (e) gehalten sind, was ihre Penetration in die Batterie (12) erleichtert.

7. Anordnung gemäß einem der vorangegangenen Ansprüche, **dadurch gekennzeichnet, dass** die Wände der Batterie (12) aufweisen wenigstens eine Sollbruchstelle, insbesondere auf der hinteren transversalen Wand (34) der Batterie (12), welche angeordnet ist im Vergleich zu einem vorstehenden Teil (26) des mechanischen Elements (20).

8. Anordnung gemäß einem der vorangegangenen Ansprüche, **dadurch gekennzeichnet, dass** das mechanische Element (20) ein hydraulischer Hauptzylinder ist, welcher einen Kolbenkörper (22) aufweist, an dessen Ende wenigstens ein hervorstehender Teil (26) angeordnet ist.

## Claims

1. Arrangement for mounting an accumulator battery (12) in an automotive vehicle (10) comprising a structural body part (14) forming an engine compartment that is arranged in front of a cell (16) forming the passenger compartment of the vehicle and separated from it by an approximately transverse bulkhead (18) holding a mechanical unit (20) of the vehicle, in front of and opposite which the battery (12) is arranged,
**characterised in that** the mechanical unit comprises at least one pointed protruding part (26) that is longitudinally facing towards the battery (12) and is designed, in the event of a longitudinal impact (F) pushing the battery (12) towards the bulkhead (18), to penetrate the battery (12) and thus prevent it from pushing the mechanical unit (20) into the passenger compartment (16).

2. Arrangement according to the previous claim, **characterised in that** the battery (12) has internal components (32) in the form of parallel plates and is oriented in such a way that the components (32) are parallel to the longitudinal direction (A) of the pointed protruding part (26).

3. Arrangement according to either of the previous claims, **characterised in that** the mechanical unit (20) has a single protruding part (26) that is approximately aligned with the centre of a rear transverse surface (34) of the battery (12).

4. Arrangement according to claim 1 or 2, **characterised in that** the mechanical unit (20) comprises a plurality of protruding parts (26) that are arranged opposite the battery (12), are aligned in the same plane and are spaced out from each other.

5. Arrangement according to the previous claim, **characterised in that** the protruding parts (26) are vertically aligned in a plane that passes between two internal components (32) of the battery.

6. Arrangement according to claim 4, **characterised in that** the protruding parts (26) are transversely aligned and are spaced out at a given distance (e) that facilitates their penetration into the battery (12).

7. Arrangement according to any one of the previous claims, **characterised in that** the walls of the battery (12) have at least one weakened zone, particularly on the rear transverse surface (34) of the battery (12), that is arranged opposite a protruding part (26) of the mechanical unit (20).

8. Arrangement according to any one of the previous claims, **characterised in that** the mechanical unit (20) is a hydraulic master cylinder that comprises a piston body (22) at the end of which is arranged at least one protruding part (26).
